# EUROPÄISCHE PATENTSCHRIFT

(11) **EP 0 503 315 B1**
(45) Veröffentlichungstag und Bekanntmachung des Hinweises auf die Patenterteilung: **10.01.1996**
(21) Anmeldenummer: 92102681.1
(22) Anmeldetag: 18.02.1992
(51) Int. Cl.: H02G 11/02

(54) **Wickelvorrichtung zum Auf- und Abwickeln einer Leitung**
Winding device for winding and unwinding a cable
Dispositif d'enroulement pour enrouler et dérouler un câble

(30) Priorität: 15.03.1991 DE 4108534
(43) Veröffentlichungstag der Anmeldung: 16.09.1992
(73) Patentinhaber: W.L. Gore & Associates GmbH, D-85636 Putzbrunn (DE)
(72) Erfinder: Steff, Josef, W-8831 Meinheim (DE)
(74) Vertreter: Klunker . Schmitt-Nilson . Hirsch

(56) Entgegenhaltungen:
- EP-A- 0 416 196
- DE-A- 3 406 221
- FR-A- 1 458 356
- US-A- 3 409 246

## Beschreibung

Die Erfindung betrifft eine Wickelvorrichtung zum Auf- und Abwickeln einer Leitung, insbesondere eines elektrischen Kabels, mit einer hohlzylindrischen Drehtrommel, auf deren Außenumfang eine Auszugslänge der Leitung durch Drehen der Drehtrommel auf- und abwickelbar ist, mit einer innerhalb der Drehtrommel angeordneten Nabe, die mindestens beim Auf- und beim Abwickelvorgang die Drehbewegung der Drehtrommel nicht mitmacht, mit einer die Leitung stützenden Stützscheibeneinrichtung, die sich radial zwischen Nabe und Drehtrommel erstreckt, und mit einem Drehantrieb zum Drehen der Drehtrommel mindestens in Aufwickelrichtung, wobei ein nabenseitiges Leitungsende im Nabenbereich aus der Wickelvorrichtung herausgeführt ist und im radialen Zwischenraum zwischen Drehtrommel und Nabe ein von der Stützscheibeneinrichtung gestützter Spiralbereich der Leitung angeordnet ist, der das Auf- und Abwickeln der Auszugslänge der Leitung trotz einer relativen Drehung der Drehtrommel gegenüber dem nabenseitigen Leitungsende ermöglicht.

Eine ähnliche Wickelvorrichtung ist aus der DE-A1-34 06 221 Als auch aus der US-A-3, 409, 246 bekannt.

Eine Wickelvorrichtung der eingangs angegebenen Art wird beispielsweise zum Auf- und Abwickeln elektrischer Leitungen, beispielsweise Stromversorgungskabel, verwendet. Ein bekanntes Beispiel sind Staubsauger mit aus dem Gehäuse herausziehbarem Anschlußkabel, das im Anschluß an die Benutzung des Staubsaugers nach Lösen einer Aufwickelbremse automatisch in das Staubsaugergehäuse zurückgezogen und dort aufgewickelt wird. Ein anderes Beispiel ist ein Gerät zum Programmieren von Robotern. Dabei wird ein elektrisches Kabel, an dessen abwickelbares Ende ein Bedienungsgerät angeschlossen ist, aus einer einem Computer zugeordneten Bedienungskonsole soweit herausgezogen, daß die programmierende Person einerseits mit dem an das Kabel angeschlossenen Bedienungsgerät den Bewegungsbereich des Roboters verlassen kann und andererseits vom Kabel her genügend Freiraum hat, um sich außerhalb des Bewegungsbereichs des Roboters um den Roboter herum begeben zu können.

Wickelvorrichtungen der eingangs angegebenen Art werden entweder liegend betrieben, also mit horizontaler Leitungsspirale, oder aufrecht, d.h. mit vertikaler Leitungsspirale. Im ersten Fall liegt die Leitungsspirale auf der Stützscheibeneinrichtung auf. Im zweiten Fall kann man die Leitungsspirale zwischen zwei vertikalen Stützscheiben halten.

Bei herkömmlichen Wickelvorrichtungen der eingangs angegebenen Art dreht sich die Stützscheibe mit der Außentrommel mit, so daß beim Auf- oder Abwickeln der Leitung nur die Nabe fest stehenbleibt. Beim Abwickelvorgang wickelt sich ein zunehmender Teil der Leitungsspirale um den Außenumfang der feststehenden Nabe. Beim Aufwickelvorgang wickelt sich ein zunehmender Teil der Leitungsspirale um den Innenumfang der Drehtrommel. Bei jedem Aufwickelvorgang und bei jedem Abwickelvorgang findet ein Umwickeln der Leitungsspirale zur Nabe oder zum Drehtrommelumfang hin statt. Dabei befindet sich immer ein Teil der Kabelspirale im Übergangsbereich zwischen dem Nabenwickelungsteil und dem Drehtrommelwickelteil. Da sich die gesamte Stützscheibe mit der Drehtrommel mitdreht, kommt es aufgrund der Reibung zwischen der Stützscheibe und der Leitungsspirale zu Leitungsmitnahmeeffekten. D.h., die sich drehende Stützscheibe versucht die von ihr gestützte Leitung per Reibung mitzunehmen. Dies hat im Bereich des Trommelwickelteils der Leitungsspirale positive Auswirkungen, da der Drehtrommelwicklungsteil mit der Drehtrommel mitgedreht werden soll. Dieser reibungsbedingte Mitnahmeeffekt wirkt sich aber ungut für den an der nicht-mitdrehenden Nabe anliegenden Nabenwicklungsteil und für den Übergangsbereich zwischen Nabenwicklungsteil und Drehtrommelwicklungsteil aus. Insbesondere im Übergangsbereich führt der reibungsbedingte Mitnahmeeffekt zu Verwerfungen und unerwünschten Schlaufenbildungen der Leitung. Solche Ververwerfungen und Schlaufenbildungen stellen einerseits eine ungute mechanische Belastung für die Leitung dar. Andererseits können solche Verwerfungsschlaufen den Radialbereich zwischen Nabenwicklungsteil und Drehtrommelwicklungsteil soweit ausfüllen, daß der Auf- oder Abwickelvorgang behindert wird.

Der Erfindung liegt die Aufgabe zugrunde, Verwerfungen und Schlaufenbildungen des Kabels aufgrund von reibungsbedingten Mitnahmeeffekten einer sich drehenden Stützscheibe mit möglichst einfachen Mitteln zu überwinden.

Diese Aufgabe wird erfindungsgemäß gelöst durch eine Wickelvorrichtung mit den im Anspruch 1 angegebenen Merkmalen. Vorteilhafte nichttriviale Weiterbildungen sind in den abhängigen Ansprüchen 2 - 10 angegeben.

Vorzugsweise weist der Stützaußenring eine radiale Erstreckung auf, die im wesentlichen gleich der radialen Erstreckung des Leitungsspiralwickels bei gänzlich zum Drehtrommelumfang gewickelter Leitungsspirale ist, wobei die restliche radiale Erstreckung zwischen Nabe und Drehtrommelinnenumfang von der Stützinnnenscheibe eingenommen wird.

Aufgrund der erfindungsgemäßen Ausgestaltung der Stützscheibeneinrichtung wird nur der Drehtrommelwickelteil mit der Drehtrommel mitgewickelt. Der Nabenwicklungsteil und der Übergangsbereich zwischen Nabenwicklungsteil und Drehtrommelwicklungsteil bleibt von Mitnahmekräften frei, weil sich die Stützinnenscheibe nicht mit der Drehtrommel mitdreht. Es kann daher nicht mehr zu Verwerfungen und Schlaufenbildungen wie bei der herkömmlichen Wickelvorrichtung kommen.

Für den Fall, daß die Wickelvorrichtung so betrieben wird, daß sich die Leitungsspirale vertikal erstreckt, kann man vorteilhafterweise beidseits der Leitungsspirale je eine Stützscheibe mit mit der Drehtrommel mitdrehendem Stützaußenring und mit der Drehtrommel nicht mitgedrehter Stützinnenscheibe vorsehen. Dadurch erreicht man, daß auf keiner Seite der Leitungsspirale irgendwelche Mitnahmekräfte auf die außerhalb des Trommelwicklungsteils befindlichen Bereiche der Leitungsspirale ausgeübt werden.

Die Stützinnenscheibe kann entweder drehsteif mit der Nabe verbunden sein, so daß sie mit der Nabe stehenbleibt. Die Stützinnenscheibe kann aber auch sowohl gegenüber der Nabe als auch gegenüber der Drehtrommel frei drehbar sein. In diesem Fall können eventuelle reibungsbedingte Mitnahmekräfte, die von der Leitung der Leitungsspirale auf die Stützinnenscheibe ausgeübt werden, zu einem entsprechenden Mitdrehen der Stützinnenscheibe mit dem die Mitnahmekraft ausübenden Leitungsteil ausgenutzt werden, so daß Relativbewegungen zwischen Stützinnenscheibe und dem die Mitnahmekraft ausübenden Leitungsteil reduziert werden.

Zu einer besonders starken Reduzierung solcher Mitnahmekräfte kommt man dann, wenn man die Stützinnenscheibe aus einer Anzahl konzentrischer Stützinnenringe zusammensetzt, die je frei sowohl gegenüber der Nabe als auch gegenüber der Drehtrommel als auch gegenüber den anderen Stützinnenringen drehbar sind. Unterschiedliche Mitnahmewirkungen an unterschiedlichen Stellen des Übergangsbereichs zwischen Nabenwicklungsteil und Drahtrommelwicklungsteil können dann unterschiedlich durch unterschiedlich starke Mitnahmedrehung des jeweils betroffenen Stützinnenrings ausgeglichen werden.

Mindestens für die Aufwickeldrehung ist ein Drehantrieb vorgesehen. Die Abwickeldrehung der Drehtrommel kann durch das Abwickeln der Leitung von dem Außenumfang der Drehtrommel bewirkt werden. Der Drehantrieb kann durch einen Elektromotor bewirkt werden. In diesem Fall können sowohl die Abwickeldrehung als auch die Aufwickeldrehung der Drahtrommel elektromotorisch bewirkt werden. Eine andere Möglichkeit ist die Verwendung einer Feder, insbesondere Spiralfeder, die einen Endes an der Nabe und anderen Endes an der Drehtrommel befestigt ist. Die Feder wird durch die Abwickeldrehung gespannt und kann dadurch den Antrieb für die Aufwickeldrehung erbringen.

Bei der überwiegenden Nutzungsweise einer erfindungsgemäßen Wickelvorrichtung dient die Wickelvorrichtung zur durchgehenden Leitungsverbindung zwischen einer feststehenden Einrichtung und einer beweglichen Einrichtung.

In diesem Fall werden die Nabe und das im Nabenbereich aus der Wickelvorrichtung herausgeführte nabenseitige Leitungsende bei der Drehung der Drehtrommel feststehend gehalten. Es besteht aber auch die Möglichkeit, die Nabe während der Auf- oder Abwickeldrehung der Drehtrommel ihrerseits zu drehen, und zwar mit einer anderen Drehzahl als die Drehtrommel. Bei dieser Benutzungsart kann die erfindungsgemäße Wickelvorrichtung als Drehzahlwandler zwischen der Wickeldrehung auf dem Drehtrommelaußenumfang und einer Drehung des nabenseitigen Leitungsende dienen.

Die erfindungsgemäße Wickelvorrichtung ist für Leitungen aller Art geeignet, beispielsweise für elektrische Kabel, Wasserschläuche, Gasschläuche usw. Die Erfindung ist besonders gut geeignet für Wickelvorrichtungen, bei welchen die Leitungsspirale in Axialrichtung einlagig gehalten wird.

Im Fall elektrischer Leitungen eignet sich die Wickelvorrichtung sowohl für Rundkabel als auch für Flachbandkabel.

Die Erfindung und deren Weiterbildungen werden nun anhand einer Ausführungsform näher erläutert. In den Zeichnungen zeigen:
- Fig. 1: eine Horizontalschnittansicht einer erfindungsgemäßen Wickelvorrichtung mit Gehäuse;
- Fig. 2: eine Vertikalschnittansicht längs der Schnittlinie 2-2 in Fig. 1; und
- Fig. 3: eine ausschnittsweise Vertikalquerschnittsdarstellung einer Nabe der in den Figuren 1 und 2 gezeigten Wickelvorrichtung.

Für die nachfolgende Beschreibung wird eine Wickelvorrichtung mit liegender oder horizontaler Leitungsspirale angenommen.

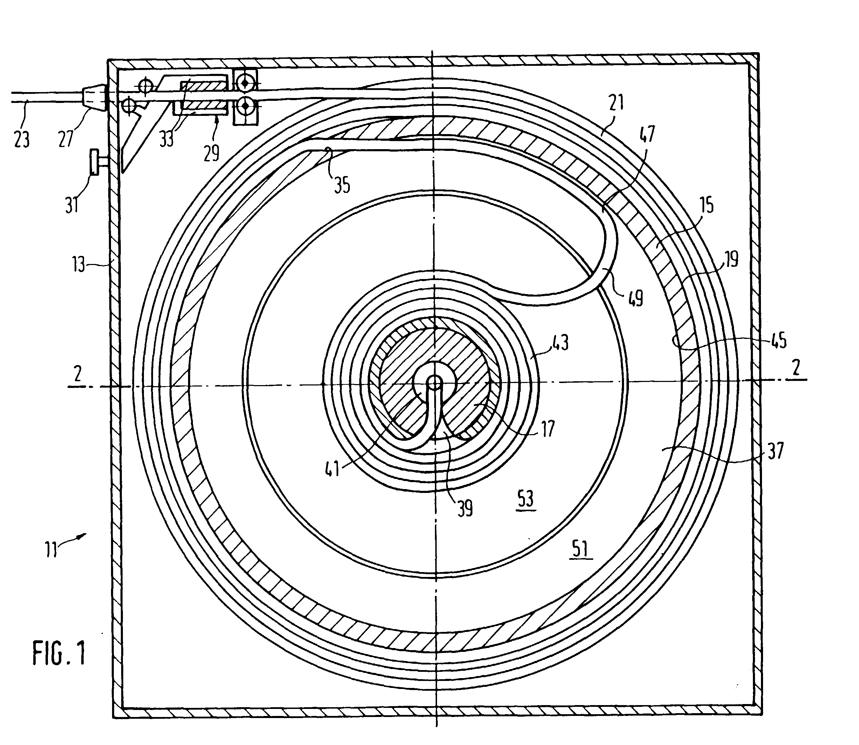

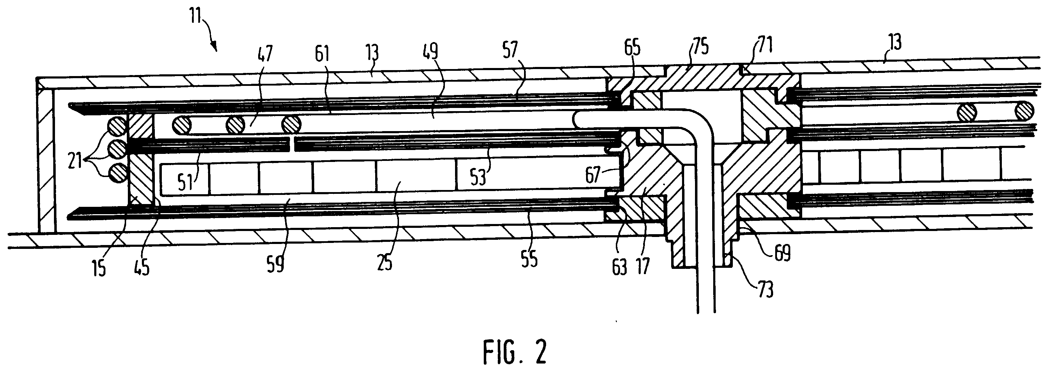

Fig. 1 zeigt eine Wickelvorrichtung 11 mit einem Gehäuse 13, in dem eine Drehtrommel 15 untergebracht ist, die konzentrisch um eine Nabe 17 angeordnet und verdrehbar ist. Auf den Außenumfang 19 der Drehtrommel ist eine Auszugslänge 21 eines elektrischen Kabels 23 gewickelt. Die Auszugslänge 21 kann unter Abziehen des Kabels 23 und unter entsprechender Drehung der Drehtrommel 15 im Gegenuhrzeigersinn von der Drehtrommel 15 abgezogen werden. Dabei wird eine in Fig. 2 gezeigte Spiralfeder 25 gespannt.

Zum Aufwickeln der abgezogenen Länge des Kabels 23 auf den Außenumfang 19 der Drehtrommel 15 wird als Drehantrieb die gespannte Spiralfeder 25 verwendet. Diese ist so vorgespannt, daß sie die Drehtrommel 15 auf jeden Fall bis zum vollständigen Aufwickeln der Auszugslänge 21 des Kabels 23 im Uhrzeigersinn dreht. In Kabelabzugsrichtung vor einer Kabeldurchführöffnung 27 des Gehäuses 13 gesehen ist eine Bremseinrichtung 29 angeordnet, die ein Abziehen des Kabels 23 von der Drehtrommel 15 ermöglicht, jedoch ein durch die gespannte Spiralfeder 25 bewirktes Aufwickeln des Kabels 23 auf die Drehtrommel 15 verhindert. Zum Aufwickeln des abgezogenen Kabels 23 auf die Drehtrommel 15 kann die Bremseinrichtung 29 durch Eindrücken eines Löseknopfes 31 teilweise oder ganz außer Kraft gesetzt werden. Zu diesem Zweck werden beidseits des Kabels 23 angreifende Bremsbacken 33, die beißzangenähnlich geöffnet oder geschlossen werden können, teilweise oder gänzlich geöffnet.

Das Kabel 23 ist durch eine Trommeldurchführöffnung 35 in den Innenraum 37 der Drehtrommel 15 geführt. Bei der in Fig. 1 gezeigten Drehstellung der Drehtrommel 15 ist ein erheblicher Teil der Auszugslänge 21 auf den Außenumfang 19 der Drehtrommel 15 gewickelt und ist der größte Teil der im Innenraum 37 liegende Bereich des Kabels 23 spiralförmig um die Nabe 17 gewickelt. Die Nabe 17 weist eine radiale Nabendurchführöffnung 39 auf, mittels welcher das Kabel 23 in einen Nabeninnenraum 41 geführt und dort in der Drehachse der Wickelvorrichtung axial aus der Nabe 17 herausgeführt ist. Das Kabel 23 ist bezüglich der Durchführöffnungen 35 und 39 unverschiebbar festgelegt.

Beim Abziehen des Kabels 23 vom Umfang 19 der Drehtrommel 15 wird ein um die Nabe 17 gewickelter Nabenwicklungsteil 43 zunehmend abgewickelt und entsteht ein sich an den Innenumfang 45 der Drehtrommel 15 anlegender, spiralförmiger Drehtrommelwicklungsteil 47 des Kabels 23. Zwischen dem Nabenwicklungsteil 43 und dem Drehtrommelwicklungsteil 47 befindet sich ein Übergangsbereich 49 des Kabels 23.

Der im Innenraum 37 der Drehtrommel 15 befindliche Teil des Kabels 23 liegt auf einer Stützscheibeneinrichtung auf, die durch einen radial an die Drehtrommel 15 anschließenden Stützaußenring 51 und eine den radialen Abstand zwischen Stützaußenring 51 und Nabe 17 ausfüllende Stützinnenscheibe 53 gebildet ist. Der Stützaußenring 51 dreht sich mit der Drehtrommel 15 mit. Die Stützinnenscheibe 53 ist bei der hier dargestellten Ausführungsform freidrehend sowohl gegenüber der Nabe 17 als auch gegenüber der Drehtrommel 15 und dem Stützaußenring 51. Die radiale Breite des Stützaußenrings 51 ist so groß wie die radiale Breite des Drehtrommelwicklungsteils 47 dann, wenn im wesentlichen die gesamte Länge des im Innenraum 37 befindlichen Teils des Kabels 23 zum Innenumfang 45 der Drehtrommel 15 gewickelt ist. D.h., die radiale Breite des Stützaußenrings 51 ist derart, daß in jedem Fall der gesamte jeweils bestehende Drehtrommelwicklungsteil 47 auf dem sich mit der Drehtrommel 15 mitdrehenden Stützaußenring 51 befindet. Daher befinden sich bei einer Drehung der Drehtrommel 15 der Nabenwicklungsteil 43 und der größte Teil des Übergangsbereichs 49 des Kabels 23 auf der Stützinnenscheibe 53, also dort, wo sie nicht mit der Drehtrommel 15 mitgedreht werden. Verwerfungen und Schlaufenbildungen aufgrund von reibungsbedingten Mitnahmeeffekten einer sich drehenden Stützscheibe werden daher auf diese Bereiche des Kabels 23 nicht ausgeübt. Da andererseits der Drehtrommelwicklungsteil 47 immer auf dem Stützaußenring 51 liegt, wird der Drehtrommelwicklungsteil 47 immer in der erforderlichen Weise mit der Drehtrommel 15 mitgedreht.

Bei der in Fig. 2 gezeigten Vertikalschnittansicht der Wickelvorrichtung 11 nach Fig. 1 ist nur ein Ausschnitt der Wickelvorrichtung 11 gezeigt. Von dem in Fig. 2 dargestellten rechten Halbmesser der Wickelvorrichtung 11 ist nur ein Teil dargestellt. Wie Fig. 2 zeigt, ist die Drehtrommel 15 als ein Hohlzylinder ausgebildet, der an seinem axialen unteren Ende mit einer unteren Trommelabdeckung 55 und an seinem axialen oberen Ende mit einer oberen Trommelabdeckung 57 versehen ist. Der gesamte Zylinderinnenraum ist mit Hilfe der aus Stützinnenscheibe 53 und Stützaußenring 51 gebildeten Stützscheibeneinrichtung in zwei axial nebeneinanderliegende Kammern unterteilt. Eine untere Kammer 59 nimmt die Spiralfeder 25 auf. Eine obere Kammer 61 enthält den zwischen dem Innenumfang 45 der Drehtrommel 15 und Außenumfang der Nabe 17 befindlichen Bereich des Kabels 23, der nachfolgend auch als Kompensationslänge bezeichnet wird.

Bei der in Fig. 2 dargestellten Drehstellung der Drehtrommel 15 ist die Kompensationslänge im wesentlichen in einer gegen den Innenumfang 45 der Drehtrommel 15 gewickelten Kabelspirale, dem Drehtrommelwicklungsteil 47, untergebracht. Die Vertikalschnittansicht in Fig. 2 zeigt also eine andere Drehstellung und eine andere Spiralverteilung der Kompensationslänge als die Horizontalschnittansicht in Fig. 1.

Die Spiralfeder 25 ist einen Endes an der Nabe 17 und anderen Endes am Umfang der Drehtrommel 15 befestigt. Durch ein Verdrehen der Drehtrommel 15 relativ zur Nabe 17 kommt es daher je nach Drehrichtung zu einer antriebsenergiespeichernden Spannung oder zu einer als Drehantriebskraft ausnutzbaren Entspannung der Spiralfeder 25.

Die untere Trommelabdeckung 55, die obere Trommelabdeckung 57 und die Stützinnenscheibe 53 sitzen drehfrei in Außenumfangsnuten 63 bzw. 65 bzw. 67 der Nabe 17. Die Trommelabdeckungen 55 und 57 werden mit der Drehtrommel 15 mitgedreht und die Außenumfangsnuten 63 und 65 bieten ein Gleitlager für die Trommelabdeckungen 55 und 57. Die Stützinnenscheibe 53 ist innerhalb ihrer Außenumfangsnut 67 ebenfalls relativ zur Nabe 17 verdrehbar, erfährt jedoch bei einer Drehung der Drehtrommel 15 keinen Antrieb. Sie wird daher im wesentlichen relativ zur Nabe 17 feststehend bleiben oder allenfalls zum Ausgleich von reibungsbedingten Mitnahmekräften einer Wickelbewegung des Übergangsbereichs 49 des Kabels 23 folgen.

Das Gehäuse 13 weist eine untere Nabenaufnahmeöffnung 69 und eine obere Nabenaufnahmeöffnung 71 auf, durch welche ein axial unteres Ende 73 bzw. ein axial oberes Ende 75 der Nabe 17 hindurchgeführt sind.

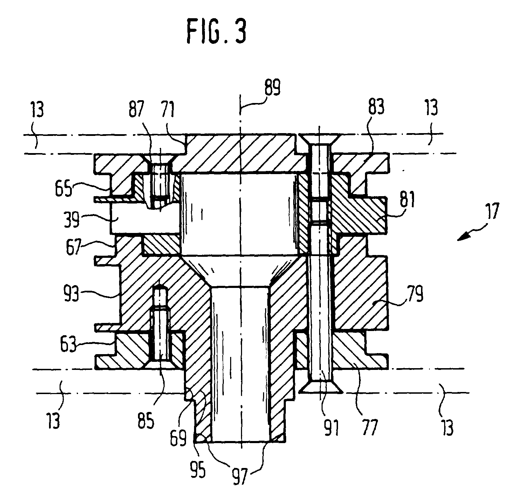

Weitergehende Einzelheiten der Nabe 17 sind in der Detailschnittansicht in Fig. 3 gezeigt.

Gemäß dieser Darstellung weist die Nabe 17 in Axialrichtung von unten nach oben gesehen vier Nabenteile auf: einen unteren Nabenring 77, eine untere Nabenscheibe 79, eine obere Nabenscheibe 81 und einen oberen Nabenring 83. Die beiden Nabenringe 77 und 83 sind mittels Schrauben 85 bzw. 87 an den Nabenscheiben 79 bzw. 81 festgeschraubt. Die Nabenringe werden zum Montieren der Trommelabdeckungen 55 und 57 abgenommen und nach deren Aufsetzen auf die Nabe 17 mit den Nabenscheiben 79 bzw. 81 verschraubt. Ein parallel zur Drehachse 89 durch die gesamte Nabe 17 geführter Verriegelungsbolzen 91 hält die beiden Nabenscheiben 79 und 81 drehsteif miteinander verriegelt. Ist der Verriegelungsbolzen 91 aus der Nabe 17 herausgezogen, können die beiden Nabenscheiben 79 und 81 relativ zueinander verdreht werden. D.h., die untere Nabenscheibe 79, welche eine Federaufnahmenut 93 für die Spiralfeder 25 aufweist, kann gegenüber der oberen Nabenscheibe 81, die mit der Nabendurchführöffnung 39 für das Kabel 23 versehen ist, beliebig verdreht werden. Ist der Verriegelungsbolzen 91 entfernt, kann daher je nach relativer Verdrehrichtung der unteren Nabenscheibe 79 gegenüber der oberen Nabenscheibe 81 die Spiralfeder 25 mehr oder weniger gespannt werden. Ist die gewünschte Federspannung eingestellt, wird der Verriegelungsbolzen 91 in der dann erreichten Drehstellung durch die Nabenscheiben 81 und 79 sowie die Nabenringe 77 und 83 gesteckt und dort befestigt.

Um verschiedene relative Drehstellungen zwischen den Nabenscheiben 79 und 81 einstellen zu können, ist mindestens eine der beiden Nabenscheiben 79 und 81 mit einer Mehrzahl von Bolzendurchführöffnungen versehen. Die andere Nabenscheibe braucht nur eine Bolzendurchführöffnung aufzuweisen. In der Praxis wird man mehrere umfangsmäßig um die Nabe 17 verteilte Verriegelungsbolzen 91 vorsehen, mit einer gleichen Anzahl von Bolzendurchführöffnungen in der einen der beiden Nabenscheiben 79 und 81 und mit einer der Anzahl der Verstellungsmöglichkeiten entsprechenden Vielzahl von Bolzendurchführöffnungen in der anderen der beiden Nabenscheiben 79 und 81.

Um bei entfernten Verriegelungsbolzen 91 die beiden Nabenscheiben 79 und 81 relativ gegeneinander verdrehen zu können, ohne das Gehäuse 13 der Wickelvorrichtung 11 öffnen zu müssen, ist ein axialer Achsstummel 95 der Nabenscheibe 79 durch die untere Nabenaufnahmeöffnung 69 aus dem Gehäuse 13 herausgeführt. Das freie Ende des Achsstummels 95 ist mit einer Angriffseinrichtung für ein Drehwerkzeug versehen. Die Angriffseinrichtung besteht vorzugsweise in zwei diametral gegenüber liegenden Abplattungen 97, die das Angreifen eines Maulschlüssels ermöglichen.

Um ein relatives Verdrehen zwischen den beiden Nabenscheiben 81 und 79 bei ungeöffnetem Gehäuse 13 vornehmen zu können, ist auch der Verriegelungsbolzen 91 durch die Wände des Gehäuses 13 hindurchgeführt, so daß der Verriegelungsbolzen 91 bei geschlossenem Gehäuse 13 montiert und demontiert werden kann.

## Patentansprüche

1. Wickelvorrichtung (11) zum Auf- und Abwickeln einer Leitung (23), insbesondere eines elektrischen Kabels,
mit einer hohlzylindrischen Drehtrommel (15), auf deren Außenumfang (19) eine Auszugslänge (21) der Leitung (23) durch Drehen der Drehtrommel (15) auf- und abwickelbar ist,
mit einer innerhalb der Drehtrommel (15) angeordneten Nabe (17), die mindestens beim Auf- und beim Abwickelvorgang die Drehbewegung der Drehtrommel (15) nicht mitmacht,
mit einer die Leitung (23) stützenden Stützscheibeneinrichtung (51, 53), die sich radial zwischen Nabe (17) und Drehtrommel (15) erstreckt,
und mit einem Drehantrieb zum Drehen der Drehtrommel (15) mindestens in Aufwickelrichtung,
wobei ein nabenseitiges Leitungsende im Nabenbereich aus der Wickelvorrichtung (11) herausgeführt ist und im radialen Zwischenraum (37) zwischen Drehtrommel (15) und Nabe (17) ein von der Stützscheibeneinrichtung (51, 53) gestützter Spiralbereich der Leitung (23) angeordnet ist, der das Auf- und das Abwickeln der Auszugslänge (21) der Leitung (23) trotz einer relativen Drehung der Drehtrommel (15) gegenüber dem nabenseitigen Leitungsende ermöglicht,
dadurch **gekennzeichnet**,
daß die Stützscheibeneinrichtung mindestens eine die Nabe (17) konzentrisch umgebende, von der Drehung der Drehtrommel (15) unabhängige Stützinnenscheibe (53) und einen die Stützinnenscheibe (53) konzentrisch umgebenden, mit der Drehtrommel (15) mitdrehenden Stützaußenring (51) aufweist.

2. Wickelvorrichtung nach Anspruch 1,
dadurch gekennzeichnet,
daß der Stützaußenring (51) eine radiale Erstreckung aufweist, die im wesentlichen gleich der radialen Erstreckung des Leitungsspiralwickels bei i.w. gänzlich zum Drehtrommelumfang gewickelter Leitungsspirale ist, und daß die restliche radiale Erstreckung von der Stützinnenscheibe (53) eingenommen wird.

3. Wickelvorrichtung nach Anspruch 1 oder 2,
dadurch gekennzeichnet,
daß die Stützinnenscheibe (53) drehsteif mit der Nabe (17) gekoppelt ist.

4. Wickelvorrichtung nach Anspruch 1 oder 2,
dadurch gekennzeichnt,
daß die Stützinnenscheibe (53) sowohl gegenüber der Nabe (17) als auch gegenüber der Drehtrommel (15) frei drehbar ist.

5. Wickelvorrichtung nach Anspruch 4,
dadurch gekennzeichnet,
daß sich die Stützinnenscheibe (53) aus mehreren konzentrischen Stützinnenringen zusammensetzt, die je sowohl gegenüber der Nabe (17) als auch gegenüber der Drehtrommel (15) als auch gegeneinander frei drehbar sind.

6. Wickelvorrichtung nach einem der Ansprüche 1 bis 5,
dadurch gekennzeichnet, daß ein elektromotorischer Antrieb vorgesehen ist.

7. Wickelvorrichtung nach einem der Ansprüche 1 bis 5,
dadurch gekennzeichnet,
daß der Antrieb eine durch das Abwickeln der Länge (21) der Leitung (23) von dem Außenumfang der Drehtrommel (15) spannbare, einen Aufwickelantrieb bewirkende Feder (25), insbesondere Spiralfeder, aufweist.

8. Wickelvorrichtung nach einem der Ansprüche 1 bis 7,
dadurch gekennzeichnet,
daß eine dem Antrieb entgegenwirkende, nach Bedarf lösbare Bremseinrichtung (29) vorgesehen ist.

9. Wickelvorrichtung nach einem der Ansprüche 1 bis 8,
wobei die Wickelvorrichtung (11) eine horizontal liegende Leitungsspirale aufweist,
dadurch gekennzeichnet,
daß die Stützscheibeneinrichtung durch eine horizontale Stützscheibe mit Stützinnenscheibe (53) und Stützaußenring (51) gebildet ist, auf der die Leitungsspirale aufliegt.

10. Wickelvorrichtung nach einem der Ansprüche 1 bis 8,
wobei die Wickelvorrichtung (11) eine vertikal stehende Leitungsspirale aufweist,
dadurch gekennzeichnet,
daß die Leitungsspirale zwischen zwei vertikalen Stützscheiben mit je einer Stützinnenscheibe (53) und einem Stützaußenring (51) angeordnet ist.

## Claims

1. A winding device (11) for winding and unwinding a line (23), in particular an electrical cable,
comprising a hollow cylindrical rotary drum (15) adapted to have an extraction length (21) of the line (23) wound on and unwound from its outer circumference (19) by rotation of said rotary drum (15),
a hub (17) disposed within the rotary drum (15), which at least during the winding and unwinding operations does not take part in the rotational movement of the rotary drum (15),
a supporting disc means (51, 53) supporting said line (23) and extending radially between hub (17) and rotary drum (15),
and a rotational drive for rotating the rotary drum (15) at least in winding direction,
with a line end on the side of the hub being passed out of the winding device (11) in the hub region, and a spiral portion of the line (23) supported by the supporting disc means (51, 53) being disposed n the radial space (37) between rotary drum (15) and hub (17), said spiral portion rendering possible winding and unwinding of said extraction length (21) of line (23) despite a relative rotation of the rotary drum (15) with respect to the line end on the side of the hub,
characterized in
that said supporting disc means comprises at least an inner supporting disc (53) concentrically surrounding the hub (17) and being independent of the rotation of the rotary drum (15) as well as an outer supporting ring (51) concentrically surrounding the inner supporting disc (53) and rotating concomitantly with the rotary drum (15).

2. A winding device according to claim 1,
characterized in that the outer supporting ring (51) has a radial extension that is substantially equal to the radial extension of the line spiral coil when the line spiral has been wound substantially completely towards the rotary drum circumference, and in that the remaining radial extension is taken by the inner supporting disc (53).

3. A winding device according to claim 1 or 2,
characterized in that the inner supporting disc (53) is coupled to the hub (17) in non-rotatable manner.

4. A winding device according to claim 1 or 2,
characterized in that the inner supporting disc (53) is freely rotatable both with respect to the hub (17) and with respect to the rotary drum (15).

5. A winding device according to claim 4,
characterized in that the inner supporting disc (53) is composed of a plurality of concentric inner supporting rings which are each freely rotatable with respect to the hub (17) and with respect to the rotary drum (15) as well as with respect to each other.

6. A winding device according to any one of claims 1 to 5,
characterized in that an electric motor drive is provided.

7. A winding device according to any one of claims 1 to 5,
characterized in that the drive comprises a spring (25), in particular a spiral spring, adapted to be tensioned by unwinding the length (21) of the line (23) from the outer circumference of the rotary drum (15) and effecting a drive in winding direction.

8. A winding device according to any one of claims 1 to 7,
characterized in that a brake means (29) is provided which counteracts said drive and is releasable as required.

9. A winding device according to any one of claims 1 to 8,
in which the winding device (11) comprises a horizontally disposed line spiral,
characterized in that the supporting disc means is constituted by a horizontal supporting disc having an inner supporting disc (53) and an outer supporting ring (51), on which said line spiral is disposed.

10. A winding device according to any one of claims 1 to 8,
in which the winding device (11) comprises a vertically disposed line spiral,
characterized in that the line spiral is disposed between two vertical supporting discs each having an inner supporting disc (53) and an outer supporting ring (51).

## Revendications

1. Dispositif d'enroulement (11) pour enrouler et dérouler une canalisation (23), en particulier un câble électrique,
comportant un tambour tournant cylindrique creux (15) sur la périphérie extérieure (19) duquel peut s'enrouler et se dérouler une longueur (21) de la canalisation (23) à extraire par rotation du tambour tournant (15),
comportant un moyeu (17) qui est disposé à l'intérieur du tambour tournant (15) et qui, au moins lors du processus d'enroulement et de déroulement, ne participe pas au mouvement de rotation du tambour tournant (15),
comportant un dispositif de disques de soutien (51, 53) qui soutient la canalisation (23) et s'étend radialement entre moyeu (17) et tambour tournant (15),
et comportant un mécanisme d'entraînement en rotation pour entraîner en rotation le tambour tournant (15) au moins dans le sens de l'enroulement,
dans lequel une extrémité de la conduite, située du côté moyeu, sort hors du dispositif d'enroulement (11) dans la zone du moyeu et dans lequel, dans l'espace radial intermédiaire (37) existant entre le tambour tournant (15) et le moyeu (17), est disposée une portion spirale de la canalisation (23) qui est soutenue par le dispositif de disques de soutien (51, 53) et qui permet l'enroulement et le déroulement de la longueur (21) de la canalisation (23) à extraire malgré une rotation relative du tambour tournant (15) par rapport à l'extrémité de la canalisation située du côté moyeu,
caractérisé par le fait que le dispositif de disques de soutien présente au moins un disque intérieur de soutien (53) entourant concentriquement le moyeu (17) et indépendant de la rotation du tambour tournant (15) et une couronne extérieure de soutien qui entoure concentriquement le disque intérieur de soutien (53) et qui est entraînée en rotation avec le tambour tournant (15).

2. Dispositif d'enroulement selon la revendication 1,
caractérisé par le fait que la couronne extérieure de soutien (51) présente une extension radiale qui est sensiblement égale à l'extension radiale de l'enroulement spiral de la canalisation lorsque la spirale de la canalisation est sensiblement entièrement enroulée contre la périphérie du tambour tournant et que l'extension radiale restante est occupée par le disque intérieur de soutien (53).

3. Dispositif d'enroulement selon la revendication 1 ou 2,
caractérisé par le fait que le disque intérieur de soutien (53) est couplé, sans liberté de rotation relative, avec le moyeu (17).

4. Dispositif d'enroulement selon la revendication 1 ou 2,
caractérisé par le fait que le disque intérieur de soutien (53) peut tourner librement aussi bien par rapport au moyeu (17) que par rapport au tambour tournant (15).

5. Dispositif d'enroulement selon la revendication 4,
caractérisé par le fait que le disque intérieur de soutien (53) est composé de plusieurs couronnes intérieures de soutien concentriques qui peuvent chacune tourner librement aussi bien par rapport au moyeu (17) que par rapport au tambour tournant (15) que l'une par rapport à l'autre.

6. Dispositif d'enroulement selon l'une des revendications 1 à 5,
caractérisé par le fait qu'un mécanisme d'entraînement électromotorisé est prévu.

7. Dispositif d'enroulement selon l'une des revendications 1 à 5,
caractérisé
par le fait que le mécanisme d'entraînement présente un ressort (25) qui peut se contraindre sous l'action du déroulement de la longueur (21) de la canalisation (23) depuis la périphérie extérieure du tambour tournant (15), et agit comme mécanisme d'entraînement d'enroulement, en particulier un ressort spiral.

8. Dispositif d'enroulement selon l'une des revendications 1 à 7,
caractérisé,
par le fait qu'est prévu un dispositif de freinage (29) qui agit à l'encontre du mécanisme d'entraînement et peut se débrayer à la demande.

9. Dispositif d'enroulement selon l'une des revendications 1 à 8,
dans lequel le dispositif d'enroulement (11) présente une spirale de canalisation placée horizontalement,
caractérisé par le fait que le dispositif de disques de soutien est formé par un disque horizontal de soutien qui comporte un disque intérieur de soutien (53) et une couronne extérieure de soutien (51) et sur laquelle repose la spirale de la canalisation.

10. Dispositif d'enroulement selon l'une des revendications 1 à 8,
dans lequel le dispositif d'enroulement (11) présente une spirale de canalisation placée verticalement,
caractérisé
par le fait que la spirale de la canalisation est disposée entre deux disques verticaux de soutien comportant chacun un disque intérieur de soutien (53) et une couronne extérieure de soutien (51).
